Europäisches Patentamt

European Patent Office

Office européen des brevets

(11) Numéro de publication: **0 364 338**
**A1**

## (12) DEMANDE DE BREVET EUROPEEN

(21) Numéro de dépôt: 89402739.0

(22) Date de dépôt: 04.10.89

(51) Int. Cl.⁵: **C08G 77/62 , C04B 35/00 , C04B 35/58**

(30) Priorité: 14.10.88 FR 8813531

(43) Date de publication de la demande:
18.04.90 Bulletin 90/16

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Lebrun, Jean-Jacques, Centre**
**Hospitalier de Lyon S**
**Chemin du Grand Revoyet**
**F-69310 Pierre Benite(FR)**
Inventeur: **Bordone, Christian**
**35, rue du Mont Cindre**
**F-69140 Rillieu-La-Pape(FR)**
Inventeur: **Bobichon, Charles**
**1, rue de l'Angile**
**F-69005 Lyon(FR)**

(74) Mandataire: **Seugnet, Jean Louis et al**
**RHONE-POULENC INTERSERVICES Service**
**Brevets Chimie 25, quai Paul Doumer**
**F-92408 Courbevoie Cédex(FR)**

(54) **Procédé pour contrôler la polymérisation catalytique d'une compostion polysilazane.**

(57) L'invention a trait à un procédé pour contrôler la polymérisation d'une composition polysilazane contenant une quantité catalytiquement efficace d'un catalyseur de polymérisation dudit polysilazane, caractérisé par le fait que, au cours de, ou, après ladite polymérisation, l'on met en contact ladite composition avec au moins un agent adsorbant.

EP 0 364 338 A1

# PROCEDE POUR CONTROLER LA POLYMERISATION CATALYTIQUE D'UNE COMPOSITION POLYSILAZANE

La présente invention a trait à la préparation d'organopolysilazanes et/ou d'organopoly(disilyl)silazanes à propriétés physico-chimiques contrôlées, utilisables notamment pour la fabrication de produits et articles céramiques à base de nitrure et/ou de carbure de silicium, par exemple sous forme de fibres.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Ils peuvent être également filés en fibres continues dont la pyrolyse aboutit à des fibres céramiques.

Ils peuvent être également mis sous forme de pellicules plus ou moins minces, de pièces massives moulées, et être utilisés comme liant pour fibres céramiques ou fibres de carbone et comme liant de frittage pour pièces céramiques poreuses. Les possibilités de mise en forme des polysilazanes constituent un de leurs avantages principaux.

Pour constituer de bons précurseurs céramiques, il faut que les polysilazanes, après pyrolyse, conduisent au matériau céramique avec un rendement pondéral élevé. Il est donc nécessaire pour cela que le polysilazane présente lors de la pyrolyse une bonne tenue thermique qui peut être apportée notamment par un haut poids moléculaire et/ou une viscosité élevée, allant jusqu'à l'état solide à température ambiante.

Or, les monomères, ou oligomères, obtenus par les procédés classiques d'ammonolyse d'un ou plusieurs organochlorosilanes, ne sont pas de bons précurseurs, à cause notamment de leur faibles températures d'ébullition. Ainsi, la pyrolyse entraine leur distillation, à moins qu'elle ne soit effectuée sous haute pression, et les rendements en céramique sont alors particulièrement bas. On comprend donc que rapidement le besoin se soit fait sentir d'élaborer des chaines macromoléculaires de masses molaires suffisantes pour obvier à ce problème.

Dans ce but, on a déjà proposé la polymérisation de silazanes au moyen d'agents catalytiques permettant d'aboutir à des produits dont les rendements en céramique après pyrolyse sont nettement améliorés.

Cette polymérisation permet également d'obtenir des polysilazanes solides à température ambiante, fusibles à plus hautes températures, et donc potentiellement filables.

Toutefois, ces réactions de polymérisation, si elles permettent d'augmenter efficacement la masse molaire des polysilazanes, présentent plusieurs inconvénients liés principalement au fait que, jusqu'à ce jour, il n'a pas été possible de les contrôler et de les stopper lorsque le polysilazane en cours de polymérisation possède les propriétés physico-chimiques adéquates à sa transformation ultérieure.

Ainsi, en maitrisant le degré de polymérisation du polysilazane, il serait possible de maitriser sa température de fusion, et, en conséquence, sa température de mise en forme, laquelle doit par ailleurs se situer impérativement en dessous de la température de début de dégradation dudit polymère.

D'autre part, des quantités résiduelles non négligeables de catalyseur peuvent encore être présentes dans le polysilazane formé puis récupéré, de sorte que, même après l'étape de polymérisation à proprement parlé, le polysilazane peut continuer d'évoluer à température ambiante et/ou lors d'un traitement et/ou d'une mise en forme ultérieurs. Ceci se traduit principalement par une augmentation incontrolable du point du fusion du polymère, ce qui peut être très génant au niveau d'une production industrielle (gestion des stocks de polymères, réglage des matériels destinés à leur transformation).

L'un des buts poursuivis par la présente invention est donc de proposer un procédé de désactivation des réactions de polymérisation catalytiques des polysilazanes, permettant de maitriser les propriétés physico-chimiques desdits polysilazanes (telles que viscosité, température de fusion, etc) dans le but notamment de faciliter et de contrôler leurs transformations ultérieures.

Ce but, parmi d'autres, est atteint par le procédé selon l'invention pour contrôler la polymérisation d'une composition polysilazane contenant une quantité catalytiquement efficace d'un catalyseur de polymérisation dudit polysilazane, et qui est caractérisé par le fait que, au cours de, ou, après ladite polymérisation, l'on met en contact ladite composition avec au moins un agent adsorbant.

Par ce procédé, de portée générale, il est désormais possible, de manière simple, économique et reproductible, de contrôler à volonté la polymérisation des polysilazanes dans le but d'obtenir des polymères présentant des propriétés physico-chimiques rigoureusement adaptées à chacune de leur utilisation particulière, notamment pour la fabrication d'articles céramiques formés, tels que de fibres.

Mais d'autres caractéristiques, aspects et avantages de l'invention apparaitront encore plus clairement à la lecture de la description qui va suivre et des exemples concrets, mais non limitatifs, relatifs à sa mise en oeuvre.

Les organopolysilazanes susceptibles d'être polymérisés selon un procédé conforme à l'invention sont des produits bien connus en soi et aisés à préparer ; on peut utiliser notamment n'importe quel produit de réaction entre : (a) au moins un organohalogénosilane de formule (I):

$R_a X_{4-a} Si$    (I)

dans laquelle X représente un halogène, généralement le chlore, et les radicaux R, identiques ou différents, sont choisis parmi l'hydrogène, un radical alkyle linéaire ou ramifié éventuellement halogéné, un radical cycloalkyle, un radical aryle tel que le radical phényl et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer :

$CH_3 HSiCl_2$, $H_2 SiCl_2$, $(CH_3)_2 HSiCl$, $HSiCl_3$

$(CH_3)_2 SiCl_2$, $(CH_3)_3 SiCl$, $CH_3 SiCl_3$, $SiCl_4$

$(CH_3)_2 Si(CH_2 Cl)_2$, $(CH_3)_3 SiCH_2 Cl$, $CH_3 Si(CH_2 Cl)_3$

$(C_6 H_5)_2 SiCl_2$, $(C_6 H_5)(CH_3)SiCl_2$, $C_6 H_5 SiCl_3$

$(CH_3)(CH_3 CH_2)SiCl_2$, $(CH_3)(CH_2 = CH)SiCl_2$

$(CH_3)_2 (CH_2 = CH) SiCl$, $(C_6 H_5)_2 (CH_2 = CH)SiCl$

$(C_6 H_5)(CH_2 = CH) SiCl_2$, $CH_3 (C_6 H_5)(CH_2 = CH) SiCl$.

Comme exemple de composés comportant au moins un groupement $NH_2$ ou NH et utilisable pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes obtenus en fin de réaction englobent plus spécifiquement :

1 - les polymères linéaires répondant aux formules :

$H_2 N (R_2 SiNH)_p SiR_2 NH_2$    (II)

et

$R_3 SiNH(R_2 SiNH)_{p'} SiR_3$    (III)

dans lesquelles R a la signification donnée pour la formule (I) ; p et p' sont des nombres entiers pouvant être compris entre 1 et 1000 généralement entre 3 et 300.

Les polymères des formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2 SiNH)_n$    (IV)

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3 SiNH_{0,5}$, $R_2 SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes susceptibles d'être polymérisés selon le procédé de l'invention sont également des produits bien connus en soi et aisés à préparer. Ils peuvent être notamment préparés par action : (a) d'un composé organique ou organosilylé comportant au moins un groupement $NH_2$ ou NH

3

comme par exemple l'ammoniac, les amines primaires ou secondaires, les silylamines, les amides, les hydrazines et les hydrazides, etc..., sur (b) au moins un organohalogénodisilane de formule :

$$R_b X_{3-b} Si\ Si\ R_c X_{3-c} \qquad (V)$$

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2\ ClSiSi\ (CH_3)_2\ Cl$, $(CH_3)_2 Cl\ SiSi\ CH_3\ Cl_2$

$CH_3\ Cl_2\ SiSi\ CH_3\ Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, le réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

C'est donc sur ces aminolysats, tels que décrits notamment ci-dessus, que l'on procède à un traitement catalytique de manière à provoquer, suivant la nature de l'aminolysat de départ, une polymérisation et/ou une copolymérisation et/ou un réarrangement des molécules, dans le but d'améliorer leurs propriétés lors de la pyrolyse.

Le terme de polymérisation utilisé dans la présente description doit donc s'entendre comme définissant de manière générale l'ensemble des transformations évoquées ci-avant qui s'opèrent au niveau des aminolysats lors d'un traitement catalytique.

De nombreux catalyseurs peuvent être utilisés à cet effet.

Une classe importante de catalyseurs est constituée par les catalyseurs acides, bien que d'autres ne soient pas a priori exclus mais sont simplement moins répandus.

A titre d'exemple, on peut ainsi utiliser des terres acides, selon un procédé tel que décrit dans la demande de brevet japonais Kokai n° 77/160446. On peut également utiliser des acides dits de Lewis, tels que les sels métalliques d'acides monocarboxyliques, et plus particulièrement des naphtenates ou des octoates de fer, de zinc, de manganèse, de plomb, de calcium, de zirconium, d'étain, de cobalt ou de cérium, dont les conditions complètes de mise en oeuvre sont rapportées par exemple dans le brevet US 3.007.886, ou bien encore tels que les sels métalliques d'acides inorganiques, et plus particulièrement des sulfates, nitrates ou chlorures de cuivre, d'argent, d'or, de zinc, de cadmium, de mercure, de fer, de cobalt ou de nickel, selon des conditions de mise en oeuvre décrites notamment dans le brevet US 3.187.030.

L'invention s'applique également particulièrement bien aux aminolysats polymérisés au moyen d'un acide fort choisi parmi l'acide perchlorique $HClO_4$ et l'acide trifluorométhane sulfonique, et selon des modalités de mise en oeuvre telles que décrites dans la demande de brevet français n° 2.577.933 au nom de la Demanderesse.

Suivant la nature des aminolysats de départ et du catalyseur utilisé, il est possible de procéder à une polymérisation en masse ou à une polymérisation en solution dans un solvant organique.

Comme cela a déjà été indiqué plus haut dans la description, le problème posé jusqu'à ce jour réside dans le fait que toutes ces réactions de polymérisation ne peuvent pas être facilement désactivées et donc contrôlées.

Ainsi, dans le cas plus particulier où l'on utilise l'acide trifluorométhanesulfonique comme catalyseur, on observe de façon surprenante et inattendue que le réaction de polymérisation se poursuit même en présence du fort dégagement d'ammoniac inhérent à ce type de polymérisation, alors même qu'il est bien admis que l'ajout d'une base dans le milieu réactionnel doit permettre d'arrêter une polymérisation de type cationique (catalyseur acide).

Donc, dans le but de maitriser ces réactions de polymérisation, et conformément à l'invention, on met alors en contact le milieu de réaction avec au moins un agent adsorbant.

On entend ici par agent adsorbant toute espèce susceptible d'adsorber, au sens conventionnel du terme, le catalyseur permettant de mettre en oeuvre la réaction de polymérisation.

La mise en contact ne se fait bien sûr que lorsque le degré d'avancement de la polymérisation est tel qu'il correspond à l'obtention d'un polymère silazane présentant les propriétés physico-chimiques désirées pour sa mise en oeuvre ultérieure.

Cette mise en contact peut se faire selon tout moyen connu en soi.

Selon une première variante, préférée, de mise en oeuvre du procédé selon l'invention, cette mise en contact se fait en introduisant directement dans le milieu de réaction l'agent adsorbant sous une forme finement divisée (poudre) ; le polymère constituant la production est alors séparé du mélange par toute technique appropriée, notamment par filtration.

Selon une autre variante, on fait passer le milieu de réaction à travers des membranes ou des tamis à base de et/ou imprégnés d'agents adsorbants ; cette technique permet alors de s'affranchir d'une étape de séparation ultérieure.

Les paramètres de mise en contact dans cette étape comprennent la quantité et la qualité de l'agent adsorbant utilisé, le temps de contact et la température, ces paramètres étant liés.

A titre d'agents adsorbants utilisables, seuls ou en mélanges, dans la présente invention, on peut citer plus particulièrement les argiles, les gels de silice, les magnésies et les charbons actifs (cf par exemple "Encyclopedia of Chemical Technology" 3ème édition, volume 1, pages 531 et s. (KIRK OTHMER)).

Selon un mode préféré de réalisation du procédé selon l'invention, on utilise à titre d'agent adsorbant du charbon actif.

L'expression "charbon actif", bien connue de l'homme de l'art, doit ici être prise dans son acception la plus large, c'est-à-dire comme couvrant une forme de carbone qui présente des caractéristiques de surface spécifique et de porosité lui conférant notamment de bonnes propriétés adsorbantes.

A ce sujet, on pourra par exemple se reporter à l'ouvrage de référence " Encyclopedia of Chemical Technology", 3ème édition, Volume 4, pages 561-570 (KIRK-OTHMER).

Le charbon actif est de préférence utilisé sous la forme d'une poudre introduite directement dans le milieu de réaction.

De faibles quantités de charbon actif suffisent ; celles-ci sont généralement comprises entre 0,1 et 5 %, de préférence entre 0,1 et 1 % en poids par rapport à la masse totale du milieu réactionnel.

Le temps de contact peut varier entre quelques minutes et une à deux heures.

La température est généralement celle à laquelle s'effectue la polymérisation de l'aminolysat de départ.

A l'issue de cette étape, on sépare alors le polysilazane polymérisé, éventuellement en solution dans un solvant, et le charbon actif, et ceci par tout moyen connu en soi, notamment par filtration.

Le polysilazane ainsi récupéré, après éventuellement élimination du solvant puis séchage, constitue alors la production.

Ces polysilazanes trouvent une application toute particulière dans la fabrication de produits et articles céramiques contenant, au moins en partie, du nitrure de silicium et/ou du carbure de silicium.

Dans la cas le plus général (obtention de poudres), on chauffe alors le polysilazane dans une atmosphère inerte ou sous vide à une température comprise entre 600 et 1500° C, jusqu'à ce que le polysilazane soit converti entièrement en $Si_3N_4$ et/ou SiC.

Compte tenu de leurs propriétés physico-chimiques rigoureusement contrôlées, les polysilazanes obtenus par le procédé selon l'invention sont particulièrement bien adaptés à la fabrication de produits céramiques formés, tels que des fibres. Le polysilazane est alors filé sous forme de fibres au moyen d'une filière puis est traité thermiquement (pyrolyse) pour donner une fibre à base de $Si_3N_4$ et/ou SiC. Ces fibres peuvent alors servir de structure de renforcement pour les matériaux composites du type notamment céramique/céramique, céramique/plastique, ou céramique/métal.

Des exemples illustrant l'invention vont maintenant être donnés.

EXEMPLE 1

Cet exemple a pour but d'illustrer la stabilité thermique des polysilazanes polymérisés selon un procédé conforme à l'invention.

On dissout 0,25 mole d'hexamethylcyclotrisilazane dans 58 g d'éther isopropylique. On introduit dans ce mélange ($\theta$ = 60° C), en tant que catalyseur, de l'acide trifluoromethanesulfonique à une concentration initiale de $2.10^{-3}$ mole par kg de silazane.

La polymérisation est effectuée pendant 1H45 à 60° C. Ensuite le mélange est séparé en deux fractions. Une première fraction dans laquelle le mélange est traité pendant 30 mn à 60° C en présence de 1 % en poids d'une poudre de charbon actif ("ACTICARBONE 2S" commercialisé par la société CECA ; surface spécifique BET : 1100 m²/g). Le polymérisat est ensuite refroidi et filtré sur fritté n° 3.

La deuxième fraction est gardée telle quelle, sans traitement au charbon actif.

Dans les deux cas, on élimine ensuite le solvant du polymérisat pendant 30 mn à 60° C sous 200 mm de Hg.

Le dosage du soufre montre que le produit traité au charbon actif contient moins de 2 ppm de soufre, alors que le produit non traité en contient 20 ppm.

On constate alors que le polysilazane traité n'évolue plus au stockage alors que le polysilazane non traité se réarrange avec formation importante d'un produit qui précipite à température ambiante.

EXEMPLE 2

Cet exemple illustre la stabilité des polysilazanes polymérisés selon l'invention face à des traitements thermiques modérés, tels que de séchage.

Un coammonolysat préparé selon les modalités pratiques des exemples 3 à 8 donnés ci-après est obtenu par réaction d'un mélange de $CH_3SiCl_3$ et de $(CH_3)_2SiCl_2$ dans un rapport molaire 59 % / 41 % avec de l'ammoniac, puis est polymérisé pendant 3 heures à 74 $^\circ$C en solution à 50 % dans l'éther isopropylique, en présence d'acide trifluorométhanesulfonique à une concentration de $5.10^{-3}$ mole par kg de coammonolysat.

Le mélange est ensuite séparé en deux fractions. La première fraction est traitée au charbon actif (traitement identique à l'exemple 1) alors que la deuxième est conservée telle quelle. Les deux fractions sont ensuite séchées pendant 1 heure à 170 $^\circ$C sous 5 mm de Hg. Les points de ramollissement Pr (mesurés au banc KOFFLER) des polymérisats obtenus sont les suivants :

produit traité : Pr 120 $^\circ$C    Produit non traité : Pr 180 $^\circ$C

Il apparait donc que le produit non traité a continué d'évoluer lors de l'étape de séchage.

EXEMPLES 3 à 8

Ces exemples ont pour but d'illustrer l'intérêt du traitement selon l'invention sur le contrôle des températures de ramolissement des polymérisats obtenus.

A/ Préparation des co-ammonolysats de départ

Dans un réacteur de trois litres double enveloppe muni d'une agitation mécanique, d'un tube d'entrée des gaz et d'un condenseur, on effectue une coammonolyse, en présence de 1,1 l d'éther isopropylique, d'un mélange de $(CH_3)_2 SiCl_2$ (forme D) et $CH_3SiCl_3$ (forme T) en proportions variables. Le mélange D/T dans l'éther isopropylique est refroidi à 3 $^\circ$C et est maintenu à cette température pendant l'introduction de $NH_3$ gazeux. Le débit d'introduction de $NH_3$ est maintenu à environ 6 ml/s de gaz et l'addition a lieu en 6 heures. Il se forme au cours de la réaction des quantités importantes de chlorydrate d'ammonium qui épaississent la solution. En fin d'essai, on filtre le $NH_4Cl$ formé sur verre fritté (diamètre moyen des pores : 10 $\mu$m). Le précipité est lavé plusieurs fois à l'aide de solvant sec. La solution récupérée est limpide. Les solvants sont évaporés sous vide (25 mbars. à 70 $^\circ$C), et les dernières traces de solvant sont éliminées à 70 $^\circ$C sous 2 mbars. Les coammonolysats obtenus sont des liquides visqueux à température ambiante. Les quantités de chlorosilanes D et T introduites en début de réaction sont les suivantes :

Exemples 3, 4, 5 :

78,7 g de $(CH_3)_2SiCl_2$ (0,61 mole) et 124,1 g de $CH_3 SiCl_3$ (0,83 mole ) soit un rapport molaire T/D de 57/43.

Exemples 6, 7 et 8 :

53,6 g de $(CH_3)_2 SiCl_2$ (0,36 mole) et 138,7 g de $CH_3SiCl_3$ (1,06 mole) soit un rapport molaire T/D de 75/25.

B/ Polymérisation des coammonolysats

Les coammonolysats obtenus en A sont dilués à 50 % en poids dans l'éther isopropylique. Le catalyseur de polymérisation utilisé est l'acide trifluorométhanesulfonique. La température est de 70° C. Après polymérisation, les produits sont filtrés sur fritté n° 3 et concentrés dans les mêmes conditions : 170° C sous 2 mm de Hg pendant 30 mn. Suivant les exemples, on a fait varier les paramètres suivants :

- un traitement ou non au charbon actif (les conditions de traitement avec charbon actif sont alors celles de l'exemple 1)
- la concentration en catalyseur en mole par kg de coammonolysat
- la durée de la polymérisation.

C/ Résultats

Les paramètres opératoires et les points de ramolissement Pr des produits obtenus en fin de procédé sont rassemblés dans le tableau I ci-dessous pour les exemples 3 à 8.

TABLEAU I

| EXEMPLE | T/D | CONCENTRATION CATALYSEUR | DUREE (heure) | TRAITEMENT CHARBON ACTIF | Pr (°C) |
|---------|-------|------------|-------|------|-------|
| 3 | 57/43 | $10^{-3}$ | 1 | non | 175,0 |
| 4 | 57/43 | $10^{-3}$ | 1 | oui | 97,5 |
| 5 | 57/43 | $10^{-2}$ | 3 | oui | 122,5 |
| 6 | 75/25 | $10^{-3}$ | 1 | non | 225,0 |
| 7 | 75/25 | $10^{-3}$ | 1 | oui | 117,5 |
| 8 | 75/25 | $10^{-2}$ | 3 | oui | 205,0 |

Ces résultats démontrent qu'il est désormais possible d'obtenir des polymères silazanes dont la température de ramolissement, et donc a fortiori la température de mise en forme, telle que de filage (lorsque l'on désire. obtenir des fibres), est largement en dessous de la température critique de début de dégradation laquelle pour ce type de produit se situe généralement aux environs de 200° C. D'une part ceci permet de réaliser des mises en forme à plus basses températures, donc de réaliser des économies en énergie et en matériels, et d'autre part il s'en suit une souplesse et une sécurité accrues au cours desdites étapes de mise en forme.

**Revendications**

1. Procédé pour contrôler la polymérisation d'une composition polysilazane contenant une quantité catalytiquement efficace d'un catalyseur de polymérisation dudit polysilazane, caractérisé par le fait que, au cours de, ou, après ladite polymérisation, l'on met en contact ladite composition avec au moins un agent adsorbant.

2. Procédé selon la revendication 1 caractérisé en ce que la polymérisation s'effectue en masse.

3. Procédé selon la revendication 1 caractérisé en ce que la polymérisation s'effectue en solution dans un solvant organique.

4. Procédé selon l'une quelconque des revendications précédentes caractérisé en ce que l'on utilise un catalyseur de polymérisation acide.

5. Procédé selon la revendication 4 caractérisé en ce que ledit catalyseur est choisi parmi l'acide perchlorique et l'acide trifluorométhanesulfonique.

6. Procédé selon l'une quelconque des revendications précédentes caractérisé en ce que ledit agent adsorbant est choisi parmi les argiles, les gels de silice, les magnésies et les charbons actifs.

7. Procédé selon la revendication 6 caractérisé en ce que l'on utilise un charbon actif.

8. Procédé selon la revendication 7 caractérisé en ce que l'on introduit une quantité de charbon actif comprise entre 0,1 et 5 % en poids par rapport à la masse totale du milieu réactionnel.

9. Procédé selon la revendication 8 caractérisé en ce que ladite quantité est comprise entre 0,1 et 1 % en poids.

10. Polysilazane susceptible d'être obtenu par la mise en oeuvre d'un procédé tel que défini à l'une quelconque des revendications 1 à 9.

11. Fibre à base de nitrure et/ou de carbure de silicium caractérisée en ce qu'elle est obtenue par filage puis pyrolyse dans une atmosphère inerte ou sous vide à une température comprise entre 600 et 1500 °C d'un polysilazane tel que défini dans la revendication 10.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 208 630 (RHONE-POULENC) * Revendications 1-8; page 8, lignes 4-21 * --- | 1 | C 08 G 77/62 C 04 B 35/00 C 04 B 35/58 |
| A | EP-A-0 235 486 (RHONE-POULENC) * Revendications 1,4,7,8; page 7, lignes 32-35; page 8, lignes 1-12 * --- | 1 | |
| A | EP-A-0 186 736 (LICENTIA) * Revendication 1 * ----- | 1 | |

DOMAINES TECHNIQUES RECHERCHES (Int. Cl.5)

C 08 G
C 08 L
C 04 B
C 08 J

Le présent rapport a été établi pour toutes les revendications

| Lieu de la recherche | Date d'achèvement de la recherche | Examinateur |
|---|---|---|
| LA HAYE | 19-12-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)